**Europäisches Patentamt**

**European Patent Office**

**Office européen des brevets**

(11) Veröffentlichungsnummer: **0 046 315**
**B1**

(12) **EUROPÄISCHE PATENTSCHRIFT**

(45) Veröffentlichungstag der Patentschrift:
06.02.85

(21) Anmeldenummer: **81200837.3**

(22) Anmeldetag: **22.07.81**

(51) Int. Cl.⁴: **H 02 K 5/20**, H 02 K 9/16

(54) Luftgekühlter Stator einer elektrischen Maschine.

(30) Priorität: **20.08.80 CH 6277/80**

(43) Veröffentlichungstag der Anmeldung:
**24.02.82 Patentblatt 82/8**

(45) Bekanntmachung des Hinweises auf die Patenterteilung:
**06.02.85 Patentblatt 85/6**

(84) Benannte Vertragsstaaten:
**AT CH DE FR IT LI**

(56) Entgegenhaltungen:
**DE - A - 1 488 561**
**DE - B - 1 034 753**
**DE - B - 1 117 726**
**DE - C - 699 878**
**FR - A - 727 615**
**FR - A - 736 474**
**FR - A - 1 453 857**
**GB - A - 134 620**
**GB - A - 518 207**
**GB - A - 534 383**
**US - A - 1 884 573**
**US - A - 1 959 527**

**Die Akte enthält technische Angaben, die nach dem Eingang der Anmeldung eingereicht wurden und die nicht in dieser Patentschrift enthalten sind.**

(73) Patentinhaber: **BBC Aktiengesellschaft Brown, Boveri & Cie., Haselstrasse, CH-5401 Baden (CH)**

(72) Erfinder: **Bongioanni, Luigi, Via Gramsci 36, Vittuone(Mailand) (IT)**
Erfinder: **Ranzani, Piero, Via Bellini 1, Albairate (IT)**

ACTORUM AG

### Beschreibung

Die Erfindung bezieht sich auf eine luftgekühlte elektrische Maschine mit einem den Statorblechkörper umgebenden Gehäuse und mit in Längsrichtung sich erstreckenden, benachbarten Innen- und Aussenkühlluftkanälen, welche durch Profilteile gebildet sind.

Im Prospekt «Dreiphasen-Käfigmotoren Typ QR, 4–12polig» der Firma Aktiengesellschaft Brown, Boveri & Cie., Baden/Schweiz (Undatiert) sind verschiedene Varianten des luftgekühlten Stators der obgenannten Art beschrieben und dargestellt.

Gemäss Seite 8 dieser Publikation sind die Motoren eigenventiliert und haben zwei Kühlluftkreise: Einen Äusseren zur Abfuhr der erzeugten Verlustwärme und einen Inneren zum Transport der Verlustwärme in den Luft-Austauscher. Die äussere Kühlluft wird von der Belüftungsseite angesaugt, durch den Wärmeaustauscher geleitet und tritt als Warmluft auf der Antriebsseite aus. Die Wärmeaustauscher sind eigenständige Bauteile, die mit dem Maschinengehäuse verbunden sind, und bestehen aus gezogenen flachovalen Stahlröhren von mindestens 1,5 mm Wandstärke. Die gute Oberflächenbeschaffenheit der Rohre garantiert eine lange Lebensdauer derselben. Eine einfache Reinigung der Kühlrohre ist infolge ihrer leicht zugänglichen Anordnung jederzeit möglich. Bei extremen Umweltbedingungen können sie mit geringem Aufwand einzeln oder segmentweise ausgewechselt werden (Bilder auf Seiten 5 und 7).

Der beschriebene und dargestellte Luft-Luft-Wärmeaustauscher besteht jedoch aus Rohrbündeln mit einem konstruktiv aufwendigen Aufbau. Für die unterschiedlichen Maschinentypen sind verschiedene Rohrquerschnitte und – Abmessungen erforderlich, ein Aufbau der Wärmeaustauscher nach dem Baukastenprinzip ist nicht möglich.

Die DE-B 1 034 753 beschreibt eine Kühleinrichtung für geschlossene oberflächengekühlte, elektrische Maschinen, bei der der das Ständerblechpaket umgebende Blechmantel aus einzelnen zu Hohlrippen verformten und je einen ausserhalb des Bereichs des Ständerblechpaketes allmählich auslaufenden Luftkanal bildenden Blechstreifen zusammengesetzt ist. Hierbei bilden das Ständerblechpaket und der es umgebende Blechmantel eine fest zusammengefügte Baueinheit.

Bei der oberflächengekühlten, geschlossenen Maschine mit Kühlrippen und einem äusseren Schutzmantel nach der DE-B 1 117 726 ist jede Kühlrippe etwa L-förmig gekrümmt und so auf den Statorumfang aufgeschweisst, dass der umgebogene Teil an jeder Rippe durch Auflage auf die Krümmungsstelle der jeweiligen Nachbarrippe einen Kühlkanal einschliesst und dass so ein die Kühlkanäle am Statorrücken abdeckender geschlossener Blechschutzmantel gebildet wird. Die Herstellung dieser Ausführungsart ist relativ aufwendig.

Hier will die Erfindung Abhilfe schaffen.

Die Erfindung, wie sie in dem Patentanspruch gekennzeichnet ist, löst die Aufgabe, ein Gehäuse für eine elektrische Maschine zu schaffen, welches eine vom Statorblechpaket unabhängige Baueinheit darstellt, welche nach dem Baukastenprinzip für verschiedene Grössen der elektrischen Maschinen einfach herstellbar ist und welches gleichzeitig die Funktion eines Wärmetauschers für Luft-Kühlung übernimmt.

Die durch die Erfindung erreichten Vorteile sind im wesentlichen darin zu sehen, dass man die Kühlanordnung von elektrischen Maschinen aus verschiedenen, serienmässig hergestellten und wirtschaftlich erreichbaren T- und L-Profilträgern herstellen kann und diese Kühlanordnungen gleichzeitig das Gehäuse der elektrischen Maschine bilden. Dabei kann die Ausbildung und Grösse der serienmässig hergestellten Profilträger beliebig der Konstruktion der Innen- und Aussenkühlluftkanäle entsprechenden Grösse und Art der elektrischen Maschine angepasst werden.

Im folgenden wird die Erfindung anhand von lediglich einen Ausführungsweg darstellenden Zeichnung näher erläutert.

Es zeigt:

Fig. 1 und 2 einen Längsschnitt durch die erfindungsgemässe Luft-Luft-gekühlte elektrische Maschine.

Fig. 3 einen Querschnitt durch ein Segment der Kühleranordnung bzw. des Gehäuses, wobei die Kühleranordnung aus T-Profilstahlträgern besteht.

Fig. 4 eine erste Variante die im wesentlichen Fig. 1 entspricht, wobei Kühleranordnung bzw. Gehäuse aus zusammengeschweissten L-Profilstahlträgern besteht.

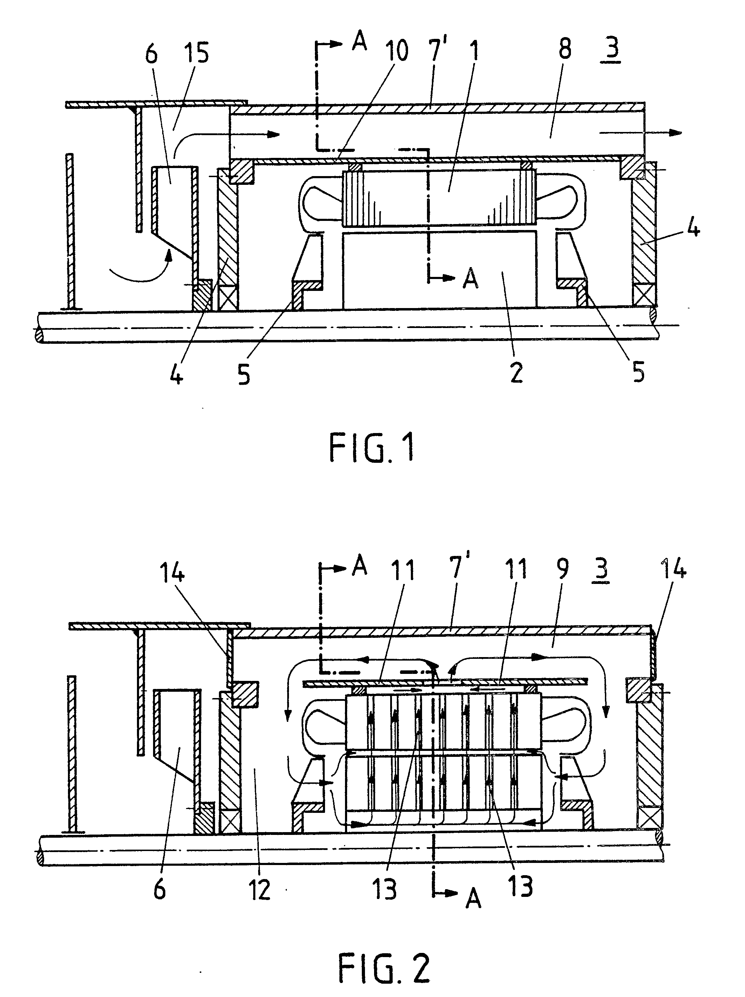

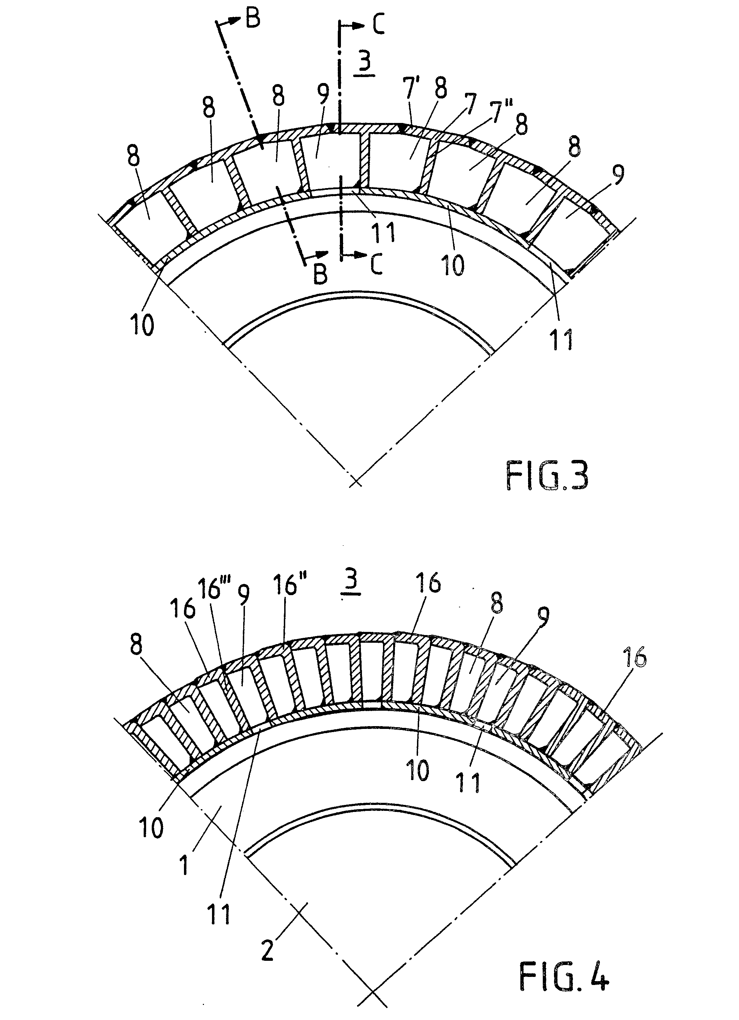

In den Figuren 1 und 2 ist ein Stator 1 und ein Rotor 2 in einem Gehäuse 3 angeordnet. Der Rotor 2 ist in Schildlagern 4 gelagert und auf der Rotorwelle innerhalb der Schildlager 4 ist beidseits jeweils ein Innenlüfter 5 angebracht. Auf der Rotorwelle ist ausserhalb des linken Schildlagers 4 ein Aussenlüfter 6 angeordnet. Wie aus Fig. 3 hervorgeht, die einen Schnitt längs der Linien A-A in Fig. 1 und 2 darstellt, besteht das Gehäuse 3 aus Stahlträgern mit T-Profil 7. Die T-Stahlprofilträger 7 sind sukzessive jeweils an deren Schenkeln 7' untereinander zusammengeschweisst und auf diese Weise entstehen nach innen offene Kanäle, die jeweils durch deren Stege 7" begrenzt sind.

Ein Teil der so gebildeten Kanäle sind mit Bezugsziffer 8 versehen und dient als Aussenkühlluftkanal und der andere Teil mit Bezugsziffer 9 dient als Innenkühlluftkanal.

Der Längsschnitt in Fig. 1 entspricht einem Schnitt B-B in Fig. 3, während der Längsschnitt in Fig. 2 dem Schnitt C-C in Fig. 3 entspricht.

Die Aussenkühlluftkanäle 8 sind in ihrer Länge durch eine innere Aussenkanalabdeckung 10 verschlossen. Die Innenkühlluftkanäle 9 sind hingegen nur teilweise mit einer inneren Innenkanalabdeckung 11 verschlossen, und stehen an den beiden Endabschnitten der Innenkühlluftkanäle 9 mit dem Innenventilatorraum 12 zu beiden Seiten des Rotors in Verbindung, bzw. es besteht im mittleren Bereich eine Verbindung zwischen den Innenkühlluftkanälen 9 und den Kühlkanälen 13 im Blechpaket des Stators 1 und des Rotors 2.

Beidseits sind die Innenkühlluftkanäle 9 oberhalb der Schildlager 4 durch Abschlussplatten 14 verschlossen.

Die Aussenkühlluftkanäle 8 münden auf der einen Maschinenseite in einen vom inneren Ventilatorraum 12 durch das Schildlager 4 abgetrennten Aussenventilatorraum 15. Die Frischluft wird durch den Aussenlüfter 6 angesaugt und strömt in Pfeilrichtung durch die Aussenkühlluftkanäle 8 und verlässt das Gehäuse am gegenüberliegenden Maschinenende (Fig. 1).

Die erwärmte Luft wird durch Einwirkung der beiden Innenlüfter 5 durch die Kühlkanäle 13 im Blechpaket des Stators 1 und des Rotors 2 in die Innenkühlluftkanäle 9 gefördert, wird durch Wärmeaustausch in Berührung mit den Aussenkühlluftkanälen 8 abgekühlt, und strömt beidseits in den Innenventilatorraum wieder zurück.

Anstelle eines aus verschweissten T-Profilstahlträgern 7 aufgebauten Gehäuses kann mit gleichem Erfolg eine Anordnung aus untereinander verschweissten Stahlträgern mit L-Profil, die in Fig. 4 veranschaulicht ist, eingesetzt werden.

In Analogie zu Fig. 3 sind die Aussenkühlluftkanäle 8 durch eine innere Aussenkanalabdeckung 10 und auch die Innenkühlluftkanäle 9 abschnittsweise durch eine innere Innenluftkanalabdeckung 11 verschlossen.

## Patentanspruch

Luftgekühlte elektrische Maschine mit einem den Statorblechkörper umgebenden Gehäuse (3) und mit in Längsrichtung sich erstreckenden, benachbarten Innen (9)- und Aussenkühlluftkanälen (8), welche durch Profilteile gebildet sind, dadurch gekennzeichnet, dass das Gehäuse als Baueinheit aus Normprofilträgern mit T- oder L-Profilen und einem inneren Mantel gebildet ist, dass die Schenkelenden (7') der T-Profilträger (7) über die gesamte Länge des Gehäuses (3) aneinanderstossen und dort verschweisst und bzw. die äusseren Schenkelenden (16') jeweils eines L-Profilträgers (16) mit dem Scheitel (16") des benachbarten über die gesamte Länge des Gehäuses (3) aneinanderstossen und dort verschweisst sind, wobei die Schenkelenden (7', 16') den äusseren Mantel des Gehäuses (3) bilden, während die Stege (7") der T-Profilträger (7) oder die Schenkel (16''') der L-Profilträger (16) mit der den inneren Mantel des Gehäuses bildenden Kanalabdeckung (10, 11) verschweist sind, wobei der innere Mantel mit Durchbrüchen versehen ist, welche die Verbindung zwischen den Innenkühlluftkanälen (9) und dem Raum zwischen Statorblechkörper und Gehäuse (3) herstellen, und das die Stege (7") der T-Profilträger (7) oder die Schenkel (16''') der L-Profilträger (16) benachbarte Kühlluftkanäle (8, 9) abgrenzen.

## Claim

Air-cooled electrical machine having a casing (3) surrounding the stator sheet metal body and having adjacent inner (9) and outer (8) cooling air ducts extending in the longitudinal direction, which cooling air ducts are formed by profile section parts, characterised in that the casing is formed as a constructional unit from standard profile section beams with T or angle profiles and an inner shell, that the ends of the arms (7') of the T profile section beams (7) butt up against one another over the total length of the casing (3) and are there welded and the outer ends of the arms (16') of each angle profile section beam (16) butt up against the apex (16") of the adjacent angle profile section beam over the total length of the casing (3) and are there welded, the ends of the arms (7', 16') forming the outer shell of the casing (3), while the webs (7") of the T profile section beam (7) or the arm (16''') of the angle profile section beam (16) are welded to the duct cover (10, 11) forming the inner shell of the casing, the inner shell being provided with penetrations which provide the connection between the inner cooling air ducts (9) and the space between the stator sheet metal body and the casing (3), and that the webs (7") of the T profile section beam (7) or the arms (16''') of the angle profile section beams (16) form the boundaries of the adjacent cooling air ducts (8, 9).

## Revendication

Machine électrique refroidie à l'air comportant une enveloppe (3) entourant le corps en tôle du stator et présentant des canaux d'air de refroidissement intérieurs (9) et extérieurs (8) adjacents qui s'étendent dans le sens longitudinal et qui sont formés par des éléments profilés, caractérisée en ce que l'enveloppe en tant qu'élément de construction est formée de profilés normalisés de section en T ou en L et d'une chemise intérieure, étant entendu que les extrémités (7') des ailes des profilés en T (7) sont contiguës sur toute la longueur de l'enveloppe (3) et sont soudées à cet endroit ou que les extrémités externes des ailes (16') de chaque profilé en L (16) sont contiguës à l'arête (16") du profilé voisin sur toute la longueur de l'enveloppe (3) et étant soudées à cet endroit, les extrémités (7', 16') des ailes formant la chemise extérieure de l'enveloppe (3), tandis que les âmes (7") des profilés en T (7) ou les ailes (16''') des profilés en L (16) sont soudées à la couverture des canaux (10, 11) formant la chemise intérieure de l'enveloppe, la chemise intérieure étant pourvue d'ouvertures qui établissent la liaison entre les canaux d'air de refroidissement internes (9) et l'espace prévu entre le corps en tôle du stator et l'enveloppe (3) et les âmes (7") des profilés en T (7) ou les ailes (16''') des profilés en L (16) délimitant des canaux d'air de refroidissement (8, 9) voisins.

FIG. 1

FIG. 2

FIG.3

FIG.4